(19) **Europäisches Patentamt European Patent Office Office européen des brevets**

(11) **EP 4 272 979 B1**

(12) **EUROPEAN PATENT SPECIFICATION**

(45) Date of publication and mention of the grant of the patent:
**09.04.2025 Bulletin 2025/15**

(21) Application number: **22172049.3**

(22) Date of filing: **06.05.2022**

(51) International Patent Classification (IPC):
**B60C 23/06** *(2006.01)* **G01G 19/08** *(2006.01)*
**G01G 19/12** *(2006.01)*

(52) Cooperative Patent Classification (CPC):
**B60C 23/064; B60C 2019/004; G01G 19/12**

(54) **ESTIMATING A TRANSIENT TIRE LOAD**

SCHÄTZUNG EINER TRANSIENTEN REIFENLAST

ESTIMATION D'UNE CHARGE DE PNEU TRANSITOIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.11.2023 Bulletin 2023/45**

(73) Proprietor: **Rimac Technology LLC**
**10431 Sveta Nedelja (HR)**

(72) Inventor: **JURIC, Demijan**
**Zagreb (HR)**

(74) Representative: **Hoffmann Eitle**
**Patent- und Rechtsanwälte PartmbB**
**Arabellastraße 30**
**81925 München (DE)**

(56) References cited:
**EP-A1- 3 659 831     EP-A2- 2 777 956**
**EP-A2- 2 778 631     CN-A- 104 029 684**

**Description**

Technical Field

The present invention relates to estimating a value of a transient tire load of at least one wheel of a vehicle. Corresponding implementations relate to a computer-implemented method for estimating a value of a given transient tire load of at least one wheel of a vehicle at a given time frame, a module provided in a vehicle for estimating a value of a given transient tire load of at least one wheel of a vehicle at a given time frame, and a storage medium comprising instructions which, when executed by a computer, cause the computer to carry out a method for estimating a value of a given transient tire load of at least one wheel of a vehicle at a given time frame.

The present invention can for example find an application in the context of vehicle development, in particular in the development of high-performance vehicles.

Technical Background

In the further growing field of electric vehicles, it is a common task to determine a tire load of the wheels of the vehicle. In this task, it may be of particular importance to not only determine the equilibrium tire load, also known as quasi-static tire load, but also the transient tire load, which is also known as dynamic tire load. The determination of the equilibrium tire load is, due to it referring to an equilibrium state, a well-studied problem and can be addressed by various means, for example using known vehicle dynamics equations such as tire load transfer distribution (TLTD) equations.

On the other hand, estimating the transient tire load conventionally requires more complicated models and in consequence computationally more demanding methods due to it being a dynamic quantity going beyond the equilibrium state.

However, estimating a tire load has to occur in real-time during driving the vehicle and thus methods using intricate models do not provide an estimation in sufficiently short time, do not provide a sufficiently accurate estimation or require a substantial amount of resources.

Therefore, there is a need for improved ways of estimating a tire load, in particular the transient tire load, of a wheel of a vehicle, for example when being driven, but also for stationary or semi-stationary scenarios. Moreover, there is a need for concepts that allow an accurate estimation of a transient tire load using simpler models such that an inexpensive method for estimating a transient tire load can be obtained that not only provides an accurate estimation in real-time but also requires less resources.

CN 104 029 684 A relates to a dynamic load estimation system including: a vehicle load bearing tire; at least one tire sensor mounted to the tire, the sensor operable to measure a tire deformation of the one tire and generate a raw load-indicating signal conveying measured deformation data; road roughness estimation means for determining a road roughness estimation; filtering means for filtering the measured deformation data by the road roughness estimation; and load estimation means for estimating an estimated load on the one tire from filtered measured deformation data; further, a road profile estimate is fused with the static load estimate in order to obtain an instantaneous tire load estimate.

Summary

The above problems are solved by the subject-matter of the independent claim 1 defining a method, of claim 11 defining a module configured to perform said method, and of claim 12 defining a storage medium comprising instructions for carrying out said method. Further preferred embodiments are given by the subject-matter of the dependent claims.

According to an embodiment of the present invention, there is provided a computer-implemented method for estimating a value of a given transient tire load of at least one wheel of a vehicle at a given time frame, the method comprising the steps of: acquiring a value of a given equilibrium tire load of the at least one wheel of the vehicle at the given time frame; obtaining at least one value of the equilibrium tire load of the at least one wheel of the vehicle at at least one time frame before the given time frame; obtaining at least one value of the transient tire load of the at least one wheel of the vehicle at the at least one time frame before the given time frame; and determining the value of the given transient tire load of the at least one wheel of the vehicle based on: the value of the given equilibrium tire load of the at least one wheel of the vehicle at the given time frame, the at least one value of the equilibrium tire load of the at least one wheel of the vehicle at the at least one time frame before the given time frame, and the at least one value of the transient tire load of the at least one wheel of the vehicle at the at least one time frame before the given time frame.

According to another embodiment of the present invention, there is provided a module 100 provided in a vehicle for estimating a value of a given transient tire load of at least one wheel of a vehicle at a given time frame, the module 100 being configured to perform the steps of the above method.

According to a further embodiment of the present invention, there is provided a storage medium comprising instructions which, when executed by a computer, cause the computer to carry out the above method.

Brief description of the drawings

Embodiments of the present invention, which are presented for better understanding the inventive concepts, but which are not to be seen as limiting the invention, will now be described with reference to the figures in which:

Fig. 1    shows a flowchart of a general method embodiment of the present invention;

Fig. 2    shows a schematic model for acquiring an equilibrium tire load.

Fig. 3    shows a schematic view of a module according to an embodiment of the present invention provided in a vehicle; and

Fig. 4    shows a schematic view of a module according to an embodiment of the present invention.

Detailed Description

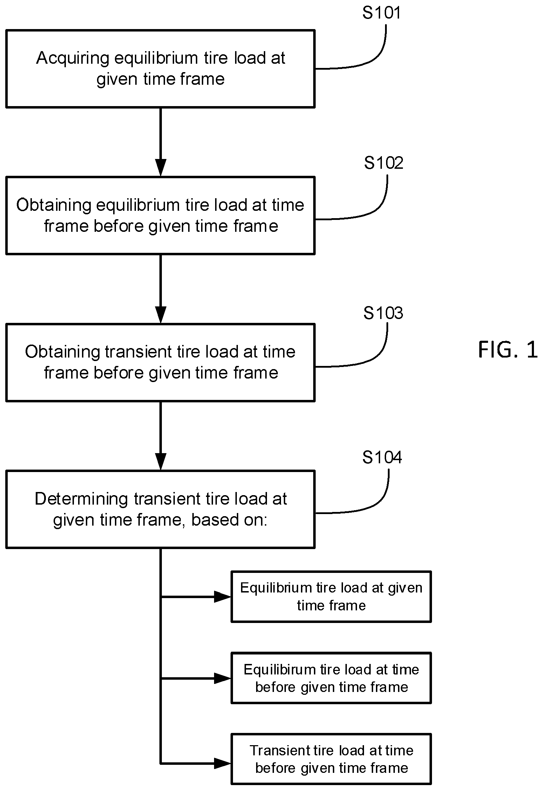

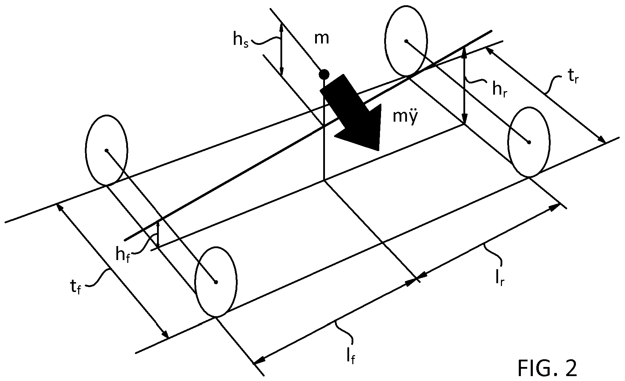

Fig. 1 shows a flowchart of a general method embodiment of the present invention.
In a first step S101 of the method for estimating a value of a given transient tire load of at least one wheel of a vehicle at a given time frame, a value of a given equilibrium tire load of the at least one wheel of the vehicle at the given time frame is acquired.
Here, a time frame refers to a specific point in time and can be understood as a consequence of the digitization of time into time frames when implementing the method on a computing device.
Further, the value of the given equilibrium tire load can be acquired using one of many vehicle dynamics equations. One example for this is known as tire load transfer distribution (TLTD) equations. In other words, in embodiments according to the present invention, the step of acquiring may be based on an estimation using a model of vehicle dynamics.
In the following, details of this calculation of the equilibrium tire loads of a vehicle are provided for the example of a vehicle with four wheels with reference to Fig. 2. It is understood that this is not limiting, that is, this can be transferred in a straightforward manner to vehicles with less, for example one or two, more, for example six or eight, wheels.
Defining the equilibrium tire load generally as $F_{eq}$, this tire load has four components, one for each wheel. These are indicated by an additional index "fl", "fr", "rl" or "rr" for "front left", "front right", "rear left" and "rear right", thus the four equilibrium tire load components are

$$F_{eq} \;=\; [F_{eq,fl}, \qquad F_{eq,fr}, \qquad F_{eq,rl}, \qquad F_{eq,rr}]$$

Using the known TLTD equations means that these four components can be estimated based on standard vehicle dynamics parameters similar to equations found in or derivable from "Vehicle handling dynamics: theory and application", Butterworth-Heinemann, 2015 by M. Abe.
In a second step S102 of the method, at least one value of the equilibrium tire load of the at least one wheel of the vehicle at at least one time frame before the given time frame is obtained. These values may be obtained on at least two ways: Either, since they are values of the equilibrium tire load, the above equations can be used based on the variables describing the vehicle dynamics at the corresponding previous time frames or, since the method will be applied iteratively, the acquired values from previous iterations can be used. The second option may be advantageous due to it requiring less computations, in particular, recalculating of a previously calculated value can be avoided. Further, it is noted that "before" is to be understood in a temporal sense, that is "at an earlier time" or "at an earlier time frame".
In a third step S103 of the method, at least one value of the transient tire load of the at least one wheel of the vehicle at the at least one time frame before the given time frame is obtained. As this step refers to a transient tire load, this value is obtained by referring to values determined by at least one previous iteration.
In this context, it is noted that an initialization of the method can be based on the assumption that the longitudinal and the lateral acceleration of the vehicle is zero, that is $a_x = a_y = 0$, for example in the above equations. This assumption corresponds to the car standing still and thus is a reasonable assumption as the initialization typically occurs when the vehicle is started, that is, is at rest. In the context of the above equations this assumption leads to the gravitational force due to the mass of the vehicle to be the only force applied to the tires.
In a fourth step S104 of the method, the value of the given transient tire load of the at least one wheel of the vehicle is determined.
In some embodiments according to the present invention, this is based on i) the value of the given equilibrium tire load of the at least one wheel of the vehicle at the given time frame, ii) the at least one value of the equilibrium tire load of the at least one wheel of the vehicle at the at least one time frame before the given time frame, and iii) the at least one value of the transient tire load of the at least one wheel of the vehicle at the at least one time frame before the given time frame.

In other words, the acquired value of the equilibrium tire load at the given time frame and the at least one value of the equilibrium tire load at time frames before the given time frame and the at least one value of the transient tire load at the time frames before the given time frame obtained build the basis for the determination of the value of the transient tire load at the given time frame.

From this, it is understood that the order of steps S101, S102 and S103 is not particularly limited as there is no dependence of these with respect to each other. For example, they may be arranged in the order as they are discussed here, or they may be arranged in parallel or step S101 is performed first and steps S102 and S103 are then performed in parallel.

Further, in embodiments according to the present invention, this method may be computer-implemented. That is to say, this method may be realized by a computing device.

Taken together, an embodiment according to the present invention provides a computer-implemented method for estimating a value of a given transient tire load of at least one wheel of a vehicle at a given time frame, the method comprising the steps of: acquiring a value of a given equilibrium tire load of the at least one wheel of the vehicle at the given time frame; obtaining at least one value of the equilibrium tire load of the at least one wheel of the vehicle at at least one time frame before the given time frame; obtaining at least one value of the transient tire load of the at least one wheel of the vehicle at the at least one time frame before the given time frame; and determining the value of the given transient tire load of the at least one wheel of the vehicle based on: the value of the given equilibrium tire load of the at least one wheel of the vehicle at the given time frame, the at least one value of the equilibrium tire load of the at least one wheel of the vehicle at the at least one time frame before the given time frame, and the at least one value of the transient tire load of the at least one wheel of the vehicle at the at least one time frame before the given time frame.

Further to the above, in some embodiments, the term "equilibrium tire load" may refer to a tire load that is determined by considering only the forces applied to the vehicle at the specific time frame for which the equilibrium tire load is determined. Accordingly, in some embodiments, the term "transient tire load" may refer to a tire load that is determined by considering the forces applied to the vehicle at the specific time frame for which the transient tire load is determined and the forces applied to the vehicle at at least one time frame before the specific time frame for which the transient tire load is determined.

In other words, in an embodiment according to the present invention, the equilibrium tire load at a specific time frame is the tire load determined by considering only the forces applied to the vehicle at the specific time frame, and the transient tire load at the specific time frame is the tire load determined by considering the forces applied to the vehicle at the specific time frame and at least one time frame before the specific time frame.

In the following further advantageous embodiments are discussed, in particular regarding the choice which values are used for determining the transient tire load at the given time frame.

For example, in an embodiment according to the present invention, the at least one time frame before the given time frame is directly preceding the given time frame.

This is to be understood in the sense that if the at least one time frame before the given time frame is more than one time frame, this refers to the circumstance that at least one of these time frames before the given time frame is the time frame directly preceding the given time frame without limiting the remaining of the time frames before the given time frames. In other words, it is sufficient that one of the at least one time frame is directly preceding the given time frame.

Further, in an embodiment according to the present invention, the at least one time frame before the given time frame may be two time frames. In addition, in a further embodiment according to the present invention, the two time frames before the given time frames may be the two time frames directly preceding the given time frame.

In such a case, in an embodiment according to the present invention the determination of transient tire load at the given time frame may be realized by using a second order filter. The underlying principle behind using a filter is that the idea that the transient tire load, also denoted as filter output $F_Y$, multiplied by a filter output weight $a$ should be equal to the equilibrium tire load, also denoted as filter input $F_U$, multiplied by a filter input weight b:

$$F_Y \cdot a = F_U \cdot b$$

This is due to the fact that the transient behavior approaches in the steady state the equilibrium behavior.

The term "second order" in this case may corresponds using the two time frames preceding the given time frame. Denoting the given time frame with the index **k,** the directly preceding time frame is denoted with **k-1** and the time frame preceding this time frame is denoted with **k-2.** Accordingly, assuming once again for the sake of the example, a vehicle with four wheels on two axles, the filter output $F_Y$ can be written as

$$F_Y(k) = \begin{bmatrix} F_{z,dyn,fl}(k) & F_{z,dyn,fl}(k-1) & F_{z,dyn,fl}(k-2) \\ F_{z,dyn,fr}(k) & F_{z,dyn,fr}(k-1) & F_{z,dyn,fr}(k-2) \\ F_{z,dyn,rl}(k) & F_{z,dyn,rl}(k-1) & F_{z,dyn,rl}(k-2) \\ F_{z,dyn,rr}(k) & F_{z,dyn,rr}(k-1) & F_{z,dyn,rr}(k-2) \end{bmatrix}$$

and the filter input $F_U$ can be written as

$$F_U(k) = \begin{bmatrix} F_{z,qs,fl}(k) & F_{z,qs,fl}(k-1) & F_{z,qs,fl}(k-2) \\ F_{z,qs,fr}(k) & F_{z,qs,fr}(k-1) & F_{z,qs,fr}(k-2) \\ F_{z,qs,rl}(k) & F_{z,qs,rl}(k-1) & F_{z,qs,rl}(k-2) \\ F_{z,qs,rr}(k) & F_{z,qs,rr}(k-1) & F_{z,qs,rr}(k-2) \end{bmatrix}.$$

In line therewith, the filter output weight a takes the form

$$a = \begin{bmatrix} 1 \\ a1 \\ a2 \end{bmatrix}$$

and the filter input weight b takes the form

$$b = \begin{bmatrix} b0 \\ b1 \\ b2 \end{bmatrix}.$$

It is noted that the first element of the filter output weight *a*, that is, *a*0 can be set to 1, as all coefficients can be divided by *a*0 and rewritten, i.e. *b* = *b*0/*a*0, without changing the filter.

Taking all together, the filter expression above written as

$$\frac{F_{z,\,dyn,\,ij}(k) + F_{z,\,dyn,\,ij}(k\text{-}1)\cdot a1 + F_{z,\,dyn,\,ij}(k\text{-}2)\cdot a2}{F_{z,\,qs,\,ij}(k)\cdot b0 + F_{z,\,qs,\,ij}(k\text{-}1)\cdot b1 + F_{z,\,qs,\,ij}(k\text{-}2)\cdot b2} = 1$$

Where i stands for the front (*f*) or the rear (*r*) axle and *j* stands for the left (*l*) or the right (*r*) wheels.

To be more specific, for the front left tire this leads to

$$\frac{F_{z,\,dyn,\,fl}(k) + F_{z,\,dyn,\,fl}(k\text{-}1)\cdot a1 + F_{z,\,dyn,\,fl}(k\text{-}2)\cdot a2}{F_{z,\,qs,\,fl}(k)\cdot b0 + F_{z,\,qs,\,fl}(k\text{-}1)\cdot b1 + F_{z,\,qs,\,fl}(k\text{-}2)\cdot b2} = 1$$

From this equation, it can be seen that the quantity of interest, the transient tire load at the given time frame, $F_{z,dyn,fl}(k)$ can be expressed as a function of the remaining quantities, namely as

$$F_{z,dyn,fl}(k) = -F_{z,dyn,fl}(k-1)\cdot a1 - F_{z,dyn,fl}(k-2)\cdot a2 + F_{z,qs,fl}(k)\cdot b0$$
$$+ F_{z,qs,fl}(k-1)\cdot b1 + F_{z,qs,fl}(k-2)\cdot b2$$

This equation can be correspondingly formulated for the remaining three wheels. Thus, the value of the transient tire load at the given time frame can be calculated based on the values of the transient tire load and the equilibrium tire load of the two preceding time frames and the current time frame.

It is noted that the choice up to which order the filter goes, is not particularly limited. In particular, also a first order filter, that is, using only one time frame preceding the given time frame, can be used. Equally, also a third or higher order filter in which three or more time frames preceding the given time frames are used, are possible.

Nevertheless, the use of a second order filter may be advantageous. This is, because a second order filter, in the spirit of a harmonic oscillator and an RLC circuit each governed by a second order differential equation, taking into account the second order allows to consider oscillations in the system. Thus, the second order filter is able to cover a far broader range than a first order filter. On the other hand, a third or higher order filter does not provide substantially more information beyond the oscillations already covered by the second order filter, however, due to it including more terms, has a higher computational effort. In other words, when considering both accuracy and required computational resources, the second order filter represents a very good tradeoff: it provides high accuracy at small computational costs.

In a further embodiment according to the present invention, the filter weights a and b, that is, the values $a1$, $a1$, $b0$, $b1$ and $b2$ are tuned. This may be done by actual vehicle measurements, results from simulation or a combination thereof. This tuning may be performed automatically by means of a standard optimization algorithm by determining the values for $a$ and $b$ such that the difference (error) between the measured tire loads and the estimated tire loads is minimized. This procedure may be performed statically, that is, the parameters are set once, or dynamically, that is, the parameters are also updated during driving, if appropriate.

In other words, in an embodiment according to the present invention, the step of determining involves predetermined optimized parameters.

Moreover, in an embodiment according to the present invention, the method may be performed for each wheel of the vehicle independently. In a further embodiment according to the present invention, the method may be performed for front and rear wheels of the vehicle independently. In a still further embodiment according to the present invention, the method may be performed for left and right wheels of the vehicles independently.

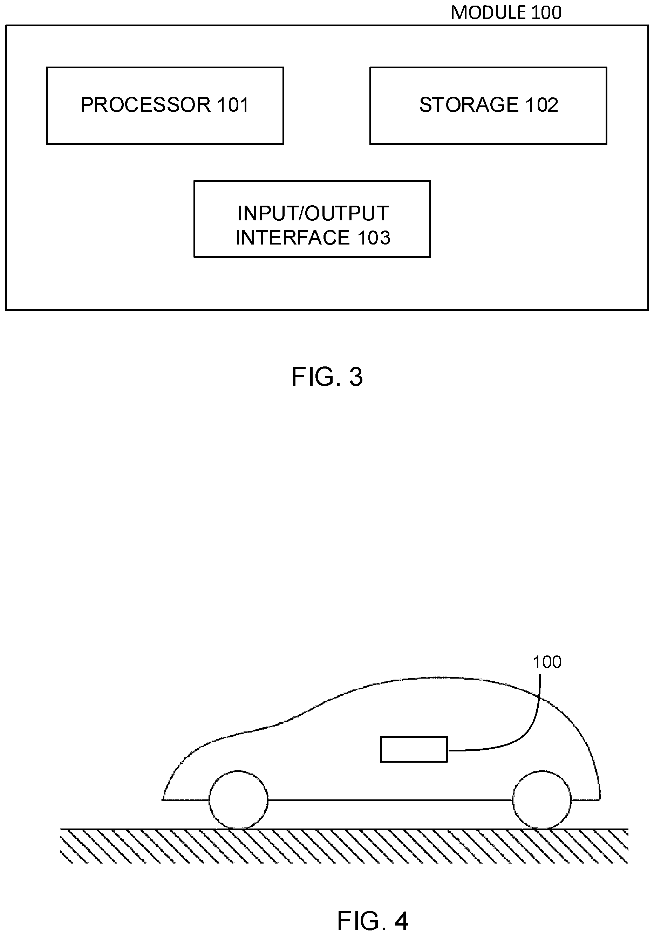

Fig. 3 shows a schematic view of a module 100 according to an embodiment of the present invention provided in a vehicle. This module 100 may be configured to perform the steps of any of the methods as described in this document, that is, this module 100 may be configured to perform methods for estimating a value of a given transient tire load of at least one wheel of a vehicle at a given time frame.

In other words, in an embodiment according to the present invention, there is provided a module 100 provided in a vehicle for estimating a value of a given transient tire load of at least one wheel of a vehicle at a given time frame, the module 100 being configured to perform the steps of any of the methods according to embodiments of the present invention.

Fig. 4 shows a schematic view of a module 100 according to an embodiment of the present invention. In particular, this module 100 includes a processor 101, a storage medium (also simply storage) 102 and an input/output interface 103. The processor 101 may be configured to perform calculations including steps related to acquiring, obtaining and determining various tire loads values associated therewith. The input/output interface 103 may be configured to receive input from the vehicle, such as sensor data related to the determination of values of tire loads. The input/output interface 103 may further be configured to provide output to the vehicle, for example to a control component such as a driving control unit. The storage medium 102 may be configured to store intermediate and/or final values related to methods according to embodiments according to the present invention discussed within this document. Further, the storage medium 102 may also comprise instructions which, when executed by a computing device, such as for example the processor 101, cause the computing device to carry out methods according to embodiments of the present invention.

Although detailed embodiments have been described, these only serve to provide a better understanding of the invention defined by the independent claims and are not to be seen as limiting.

## Claims

1. A computer-implemented method for estimating a value of a given transient tire load of at least one wheel of a vehicle at a given time frame, the method comprising the steps of:

   acquiring a value of a given equilibrium tire load of the at least one wheel of the vehicle at the given time frame;
   obtaining at least one value of the equilibrium tire load of the at least one wheel of the vehicle at at least one time frame before the given time frame;
   obtaining at least one value of the transient tire load of the at least one wheel of the vehicle at the at least one time frame before the given time frame; and
   determining the value of the given transient tire load of the at least one wheel of the vehicle based on:

      the value of the given equilibrium tire load of the at least one wheel of the vehicle at the given time frame,
      the at least one value of the equilibrium tire load of the at least one wheel of the vehicle at the at least one time frame before the given time frame, and
      the at least one value of the transient tire load of the at least one wheel of the vehicle at the at least one time frame before the given time frame.

2. The method according to claim 1, wherein

the equilibrium tire load at a specific time frame is the tire load determined by considering only the forces applied to the vehicle at the specific time frame, and

the transient tire load at the specific time frame is the tire load determined by considering the forces applied to the vehicle at the specific time frame and at least one time frame before the specific time frame.

3. The method according to claim 1 or 2, wherein the at least one time frame before the given time frame is directly preceding the given time frame.

4. The method according to any one of claim 1 - 3, wherein the at least one time frame before the given time frame are two time frames.

5. The method according to claim 4, wherein the two time frames before the given time frames are the two time frames directly preceding the given time frame.

6. The method according to any of claims 1 - **5,** wherein the step of acquiring is based on an estimation using a model of vehicle dynamics.

7. The method according to any of claims 1 - 6, wherein the step of determining involves predetermined optimized parameters.

8. The method according to any one of claims 1 - 7, wherein the method is performed for each wheel of the vehicle independently.

9. The method according to any one of claims 1 - 6, wherein the method is performed for front and rear wheels of the vehicle independently.

10. The method according to any one of claims 1 - 7, wherein the method is performed for left and right wheels of the vehicles independently

11. A module provided in a vehicle for estimating a value of a given transient tire load of at least one wheel of a vehicle at a given time frame, the module being configured to perform the steps of the method according to claim 1.

12. A storage medium comprising instructions which, when executed by a computing device, cause the computing device to carry out the method according to claim 1.

**Patentansprüche**

1. Computerimplementiertes Verfahren zur Schätzung des Wertes einer gegebenen transienten Reifenlast von mindestens einem Rad eines Fahrzeugs in einem gegebenen Zeitrahmen, wobei das Verfahren die Schritte umfasst von:

Erfassen eines Werts einer gegebenen gleichmäßigen Reifenlast des mindestens einen Rads des Fahrzeugs in einem gegebenen Zeitrahmen;

Erhalten mindestens eines Werts der gleichmäßigen Reifenlast des mindestens einen Rads des Fahrzeugs in mindestens einem Zeitrahmen vor dem vorgegebenen Zeitrahmen;

Erhalten mindestens eines Werts der transienten Reifenlast des mindestens einen Rads des Fahrzeugs in mindestens einem Zeitrahmen vor dem vorgegebenen Zeitrahmen; und

Bestimmen des Werts der gegebenen transienten Reifenlast des mindestens einen Rads des Fahrzeugs basierend auf:

dem Wert der gegebenen gleichmäßigen Reifenlast des mindestens einen Rads des Fahrzeugs im gegebenen Zeitrahmen,

dem mindestens einen Wert der gleichmäßigen Reifenlast des mindestens einen Rads des Fahrzeugs zu dem mindestens einen Zeitrahmen vor dem gegebenen Zeitrahmen und

dem mindestens einen Wert der transienten Reifenlast des mindestens einen Rads des Fahrzeugs zu dem mindestens einen Zeitrahmen vor dem gegebenen Zeitrahmen.

**2.** Verfahren nach Anspruch 1, wobei

die gleichmäßige Reifenlast in einem spezifischen Zeitrahmen die Reifenlast ist, die durch Berücksichtigung nur der Kräfte bestimmt wird, die in dem spezifischen Zeitrahmen auf das Fahrzeug ausgeübt werden, und die transiente Reifenlast in dem spezifischen Zeitrahmen die Reifenlast ist, die durch Berücksichtigung der Kräfte bestimmt wird, die auf das Fahrzeug in dem spezifischen Zeitrahmen und mindestens einem Zeitrahmen vor dem spezifischen Zeitrahmen ausgeübt werden.

**3.** Verfahren nach Anspruch 1 oder 2, wobei der mindestens eine Zeitrahmen vor dem gegebenen Zeitrahmen unmittelbar vor dem gegebenen Zeitrahmen liegt.

**4.** Verfahren nach einem der Ansprüche 1-3, wobei der mindestens eine Zeitrahmen vor dem gegebenen Zeitrahmen zwei Zeitrahmen ist.

**5.** Verfahren nach Anspruch 4, Wobei die zwei Zeitrahmen vor dem gegebenen Zeitrahmen die zwei Zeitrahmen sind, die dem gegebenen Zeitrahmen unmittelbar vorausgehen.

**6.** Verfahren nach einem der Ansprüche 1-5, wobei der Schritt des Erfassens auf einer Schätzung unter Verwendung eines Fahrzeugdynamikmodells basiert.

**7.** Verfahren nach einem der Ansprüche 1-6, wobei der Schritt des Bestimmens vorbestimmte optimierte Parameter beinhaltet.

**8.** Verfahren nach einem der Ansprüche 1-7, wobei das Verfahren für jedes Rad des Fahrzeugs unabhängig durchgeführt wird.

**9.** Verfahren nach einem der Ansprüche 1-6, wobei das Verfahren für die Vorder- und Hinterräder des Fahrzeugs unabhängig voneinander durchgeführt wird.

**10.** Verfahren nach einem der Ansprüche 1-7, wobei das Verfahren für die linken und rechten Räder der Fahrzeuge unabhängig voneinander durchgeführt wird.

**11.** In einem Fahrzeug bereitgestelltes Modul zum Schätzen eines Werts seiner gegebenen transienten Reifenlast von mindestens einem Rad eines Fahrzeugs in einem gegebenen Zeitrahmen, wobei das Modul so konfiguriert ist, dass es die Schritte des Verfahrens nach Anspruch 1 durchführt.

**12.** Speichermedium, das Anweisungen umfasst, die, wenn sie von einer Rechnenvorrichtung ausgeführt werden, die Rechnenvorrichtung veranlassen, das Verfahren nach Anspruch 1 auszuführen.

**Revendications**

**1.** Procédé mis en œuvre par ordinateur pour estimer une valeur d'une charge de pneu transitoire donnée d'au moins une roue d'un véhicule à un moment donné, le procédé comprenant les étapes consistant à :

acquérir une valeur d'une charge de pneu d'équilibre donnée de la au moins une roue du véhicule au moment donné ;
obtenir au moins une valeur de la charge de pneu d'équilibre de la au moins une roue du véhicule à au moins un moment avant le moment donné ;
obtenir au moins une valeur de la charge de pneu transitoire de la au moins une roue du véhicule à au moins un moment avant le moment donné ; et
déterminer la valeur de la charge de pneu transitoire donnée de la au moins une roue du véhicule sur la base de :

la valeur de la charge de pneu d'équilibre donnée de la au moins une roue du véhicule au moment donné,
la au moins une valeur de la charge de pneu d'équilibre de la au moins une roue du véhicule à au moins un moment avant le moment donné, et
la au moins une valeur de la charge de pneu transitoire de la au moins une roue du véhicule à au moins un moment avant le moment donné.

**2.** Procédé selon la revendication 1, dans lequel

la charge de pneu d'équilibre à un moment spécifique est la charge de pneu déterminée en prenant seulement en considération les forces appliquées au véhicule au moment spécifique, et

la charge de pneu transitoire au moment spécifique est la charge de pneu déterminée en prenant en considération les forces appliquées au véhicule au moment spécifique et à au moins un moment avant le moment spécifique.

**3.** Procédé selon la revendication 1 ou 2, dans lequel le au moins un moment avant le moment donné précède directement le moment donné.

**4.** Procédé selon l'une quelconque des revendications 1 à 3, dans lequel le au moins un moment avant le moment donné est deux moments.

**5.** Procédé selon la revendication 4, dans lequel les deux moments avant les moments donnés sont les deux moments précédant directement le moment donné.

**6.** Procédé selon l'une quelconque des revendications 1 à 5, dans lequel l'étape d'acquisition est basée sur une estimation utilisant un modèle de dynamique de véhicule.

**7.** Procédé selon l'une quelconque des revendications 1 à 6, dans lequel l'étape de détermination implique des paramètres optimisés prédéterminés.

**8.** Procédé selon l'une quelconque des revendications 1 à 7, dans lequel le procédé est réalisé pour chaque roue du véhicule de manière indépendante.

**9.** Procédé selon l'une quelconque des revendications 1 à 6, dans lequel le procédé est réalisé pour des roues avant et arrière du véhicule de manière indépendante.

**10.** Procédé selon l'une quelconque des revendications 1 à 7, dans lequel le procédé est réalisé pour des roues gauche et droite du véhicule de manière indépendante.

**11.** Module prévu dans un véhicule pour estimer une valeur d'une charge de pneu transitoire donnée d'au moins une roue d'un véhicule à un moment donné, le module étant configuré pour réaliser les étapes du procédé selon la revendication 1.

**12.** Support de stockage comprenant des instructions qui, lorsqu'exécutées par un dispositif informatique, amènent le dispositif informatique à réaliser le procédé selon la revendication 1.

S101

Acquiring equilibrium tire load at
given time frame

S102

Obtaining equilibrium tire load at time
frame before given time frame

S103

Obtaining transient tire load at time
frame before given time frame

FIG. 1

S104

Determining transient tire load at
given time frame, based on:

Equilibrium tire load at given
time frame

Equilibirum tire load at time
before given time frame

Transient tire load at time
before given time frame

FIG. 2

MODULE 100

| PROCESSOR 101 | STORAGE 102 |

INPUT/OUTPUT INTERFACE 103

FIG. 3

100

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104029684 A

**Non-patent literature cited in the description**

- **M. ABE**. Vehicle handling dynamics: theory and application. Butterworth-Heinemann, 2015